(19) Europäisches Patentamt
European Patent Office
Office européen des brevets

(11) EP 1 975 200 A1

(12) EUROPEAN PATENT APPLICATION
published in accordance with Art. 158(3) EPC

(43) Date of publication:
**01.10.2008 Bulletin 2008/40**

(21) Application number: **07707122.3**

(22) Date of filing: **19.01.2007**

(51) Int Cl.:
***C08L 15/00*** *(2006.01)* ***B60C 1/00*** *(2006.01)*
***C08C 19/44*** *(2006.01)* ***C08K 3/04*** *(2006.01)*
***C08L 7/00*** *(2006.01)* ***C08L 9/00*** *(2006.01)*

(86) International application number:
**PCT/JP2007/050834**

(87) International publication number:
**WO 2007/083765 (26.07.2007 Gazette 2007/30)**

(84) Designated Contracting States:
**DE ES FR GB IT**

(30) Priority: **20.01.2006 JP 2006012129**

(71) Applicant: **Bridgestone Corporation**
**Tokyo 104-8340 (JP)**

(72) Inventors:
- **KURAZUMI, Junko**
  **Kodaira-shi, Tokyo, 187-8531 (JP)**
- **MASAKI, Kouji**
  **Kodaira-shi, Tokyo, 187-8531 (JP)**

(74) Representative: **Whalley, Kevin**
**Marks & Clerk**
**90 Long Acre**
**London WC2E 9RA (GB)**

# (54) RUBBER COMPOSITION CONTAINING MODIFIED POLYBUTADIENE RUBBER AND TIRE

(57) A rubber composition comprises 10 to 70 parts by mass of carbon black having 20 to 100 $m^2/g$ of the specific surface area by nitrogen adsorption per 100 parts by mass of a rubber component comprising 20 to 80 parts by mass of a modified polybutadiene rubber and 80 to 20 parts by mass of natural rubber and/or at least one other diene-based synthetic rubber, wherein the modified polybutadiene is obtained by polymerizing 1,3-butadiene in an organic solvent using a compound having a rare earth element of the lanthanoid series, followed by modifying the obtained polybutadiene, and has a content of the cis-1,4-bond of 92% or greater, a content of vinyl bond of 1.5% or smaller and a fraction of the modified chain end of 20% or greater; and a tire using the rubber composition for a sidewall. The rubber composition exhibits excellent low heat buildup property and resistance to fracture.

EP 1 975 200 A1

## Description

### TECHNICAL FIELD

The present invention relates to a rubber composition containing a modified polybutadiene rubber and a tire. More particularly, the present invention relates to a rubber composition comprising a modified polybutadiene rubber, which is obtained by modifying a polymer having active chain ends obtained by using a catalyst comprising a compound having a rare earth element of the lanthanoid series with a specific compound exhibiting interaction with carbon black and has a great fraction of the modified chain end and a great content of the cis-1,4-bond, and exhibiting excellent low heat buildup property and resistance to fracture and to a tire using the rubber composition for a sidewall

### BACKGROUND ART

Recently, extremely greater decrease in the fuel consumption is being required for automobiles in connection with the global regulation of discharge of carbon dioxide based on the increased social requirement on the energy saving and the increased interest on the environmental problems. To satisfy the requirement, decrease in the rolling resistance is required with respect to the performance of a tire. The rubber composition for a sidewall is required to exhibit not only improved resistance to fracture but also an improved low heat buildup property.

Polybutadiene having a great content of the cis-1,4-bond obtained by polymerization using a compound having a rare earth element of the lanthanoid series is, in general, a linear polymer having a small content of branched structure and exhibits more excellent resistance to fracture, low heat buildup property and resistance to fatigue than those of conventional polybutadiene having a great content of the cis-1,4-bond obtained by polymerization using a catalyst containing cobalt, nickel or titanium as the main component, and the use of the above polybutadiene for the rubber component in the rubber composition for a sidewall has been studied.

To obtain a rubber composition exhibiting a low heat buildup property, various technologies for improving dispersion of fillers used for the rubber composition have been developed. Among the technologies, the process in which active chain ends of a diene-based polymer obtained by the anionic polymerization using an organolithium compound is modified with a functional group exhibiting interaction with the filler, is most widely conducted.

As the above process, for example, a process in which carbon black is used as the filler and the active chain end of the polymer is modified with a tin compound (for example, refer to Patent Reference 1) and a process in which carbon black is used as the filler and amino group is introduced into the active chain end (for example, refer to Patent Reference 2), are disclosed.

On the other hand, it is known that a living polymer is formed also by the coordination polymerization using a catalyst containing a compound having a rare earth element of the lanthanoid series. Modification of the living active chain end of the obtained polymer with a specific coupling agent or modifies has been examined (for example, refer to Patent References 3 to 6).

However, to achieve the decrease in the fuel consumption to the degree required by the market, further improvements in the process for modifying the active chain end of the molecule of polybutadiene having a great content of the cis-1,4-bond, which is obtained by polymerization using a catalyst containing a compound having a rare earth element of the lanthanoid series, with a functional group is desired.

[Patent Reference 1] Japanese Patent Application Publication No. Heisei 5(1993)-87530
[Patent Reference 2] Japanese Patent Application Laid-Open No. Showa 62(1987)-207342
[Patent Reference 3] Japanese Patent Application Laid-Open No. Showa 63(1988)-178102
[Patent Reference 4] Japanese Patent Application Laid-Open No. Heisei 5(1993)-59103
[Patent Reference 5] Japanese Patent Application Laid-Open No. Showa 63(1988)-297403
[Patent Reference 6] The pamphlet of International Patent Application Laid-Open No. WO95/04090

### DISCLOSURE OF THE INVENTION

Under the above circumstances, the present invention has an object of providing a rubber composition exhibiting excellent low heat buildup property and resistance to fracture and a tire using the rubber composition for a sidewall.

As the result of intensive studies by the present inventors to achieve the above object, it was found that a rubber composition comprising a modified polybutadiene rubber, which was obtained by modifying a polymer having active chain ends obtained by polymerizing 1,3-butadiene in an organic solvent with a specific compound, had a specific fraction or greater of the modified chain end and a specific content or greater of the cis-1,4-bond and exhibited excellent interaction with carbon black and inorganic fillers, provided a tire exhibiting excellent low heat buildup property and resistance to fracture. The present invention has been completed based on the knowledge.

The present invention provides:

1. A rubber composition comprising a rubber component, which comprises 20 to 80 parts by mass of a modified polybutadiene rubber having a content of cis-1,4 bond of 92% or greater, a content of vinyl bond of 1.5% or smaller and a fraction of modified chain end of 20% or greater and 80 to 20 parts by mass of natural rubber and/or at least one other diene-based synthetic rubber, and 10 to 70 parts by mass of carbon black having a specific surface area by nitrogen adsorption of 20 to 100 $m^2/g$ per 100 parts by mass of the rubber component;
2. A rubber composition described above in 1., wherein the modified polybutadiene is obtained by modifying a polymer having active chain ends, which is obtained by polymerizing 1,3-butadiene in an organic solvent using a catalyst comprising a compound having a rare earth element of a lanthanoid series, with a modifier having nitrogen atom, oxygen atom and/or sulfur atom;
3. A rubber composition described above in 2., wherein the modifier is at least one compound selected from compounds of Component (a) represented by general formula (I):

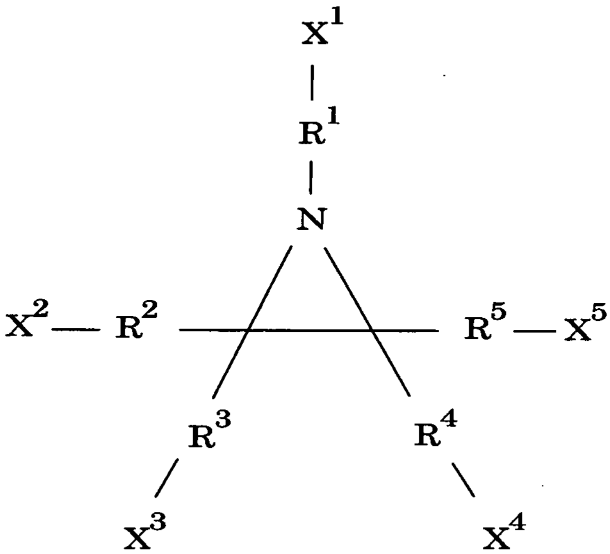

··· (I)

wherein $X^1$ to $X^5$ each represent a monovalent functional group which has hydrogen atom or at least one atom or group selected from halogen atoms, carbonyl group, thiocarbonyl group, isocyanate group, thioisocyanate group, epoxy group, thioepoxy group, halogenated silyl group, hydrocarbyloxysilyl group and sulfonyloxy group and does not have any of active proton and onium salts, atoms and groups represented by $X^1$ to $X^5$ may be same with or different from each other, and at least one of $X^1$ to $X^5$ does not represent hydrogen atom; $R^1$ to $R^5$ each independently represent a single bond or a divalent hydrocarbon group having 1 to 18 carbon atoms; and a plurality of aziridine rings may be bonded via any one of groups represented by $X^1$ to $X^5$ and $R^1$ to $R^5$;
4. A rubber composition described above in 3., wherein the compound of Component (a) is a compound represented by general formula (I) in which $X^1$ does not represent hydrogen atom when $R^1$ represents a single bond, and $R^1$ does not represent a single bond when $X^1$ represents hydrogen atom;
5. A rubber composition described above in 2., wherein the modifier is at least one compound selected from following compounds of Components (b) to (h) :

Component (b): a halogenated organometallic compound, a halogenated metal compound or an organometallic compound represented by one of formulae: $R^6_nM'Z_{X-n}$, $R^7_nM'(-^{R}8-COO^{R}9)_{x-n}$ and $R^7_nM'(-R^8-COR^9)_{x-n}$, wherein $R^6$ to $R^8$ each represent a hydrocarbon group having 1 to 20 carbon atoms and may represent same groups or different groups, $R^9$ represents a hydrocarbon group having 1 to 20 carbon atoms which may have carbonyl group or ester group at a side chain, M' represents tin atom, silicon atom, germanium atom or phosphorus atom, Z represents a halogen atom, x represents valence of the atom represented by M', and n represents an integer of 0 to (x-1);
Component (c): a heterocumulene compound having Y=C=Y' bond in a molecule, wherein Y represents carbon atom, oxygen atom, nitrogen atom or sulfur atom, and Y' represents oxygen atom, nitrogen atom or sulfur atom;
Component (d): a three-membered heterocyclic compound represented by general formula (II):

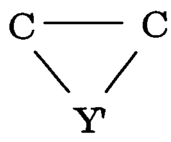

... (II)

wherein Y' represents -O-, -NH- or -S-;

Component (e): a halogenated isocyano compound;

Component (f): a carboxylic acid, an acid halide, an ester compound, a carbonic acid ester compound or an acid anhydride represented by one of formulae: $R^{10}$-$(COOH)_m$, $R^{11}(COZ)_m$, $R^{12}$-(COO-$R^{13}$), $R^{14}$-OCOO-$R^{15}$, $R^{16}$-(COOCO-$R^{17})_m$ and general formula (III):

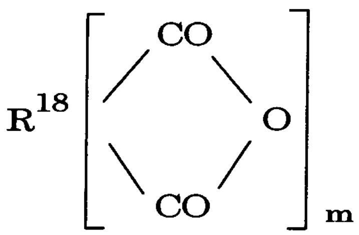

... (III)

wherein $R^{10}$ to $R^{18}$ each represent a hydrocarbon group having 1 to 50 carbon atoms and may represent same groups or different groups, Z represents a halogen atom, and m represents an integer of 1 to 5;

Component (g): a metal salt of a carboxylic acid represented by any one of formulae: $R^{19}{}_kM''(OCOR^{20})_{4-k}$, $R^{21}{}_kM''(OCO$-$R^{22}$-$COOR^{23})_{4-k}$ and general formula (IV):

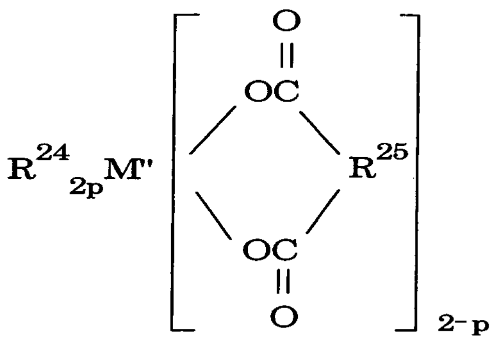

... (IV)

wherein $R^{19}$ to $R^{25}$ each represent a hydrocarbon group having 1 to 20 carbon atoms and may represent same groups or different groups, M" represents tin atom, silicon atom or germanium atom, k represents an integer of 0 to 3, and p represents 0 or 1; and

Component (h): an N-substituted aminoketone, an N-substituted aminothioketone, an N-substituted aminoaldehyde, an N-substituted aminothioaldehyde or a compound having -C-(=$Y^1$)-N< bond in a molecule, $Y^1$ representing oxygen atom or sulfur atom.

6. A rubber composition described above in any one of 2. to 5., wherein the polymer having active chain ends is obtained by polymerizing 1,3-butadiene using a catalyst system comprising:

Component (A): a compound having a rare earth element of a lanthanoid series having an atomic number of 57 to 71 in the Periodic Table or a reaction product of said compound with a Lewis base;

Component (B): an organoaluminum compound represented by $AlR^{26}R^{27}R^{28}$, wherein $R^{26}$ and $R^{27}$ each represent hydrogen atom or a hydrocarbon group having 1 to 10 carbon atoms and may represent a same atom

or group or different atom and groups, and $R^{28}$ represents a hydrocarbon group having 1 to 10 carbon atoms, which may be same with or different from groups represented by $R^{26}$ and $R^{27}$; and
Component (C): at least one of Lewis acids, complex compounds of metal halide compounds and Lewis bases and organic compounds having an active halogen.

7. A rubber composition described above in 6., wherein the compound having a rare earth element of a lanthanoid series of Component (A) is a salt of neodymium soluble in a hydrocarbon solvent;
8. A rubber composition described above in 7., wherein the compound having a rare earth element of a lanthanoid series of Component (A) is a salt of neodymium with a branched carboxylic acid or a reaction product of said salt with a Lewis base;
9. A rubber composition described above in any one of 6. to 8., wherein the catalyst system further comprises an aluminoxane as Component (D);
10. A rubber composition described above in 9., wherein the catalyst system is prepared preliminarily in presence of Component (A), Component (B), Component (C), Component (D) and 1,3-butadiene;
11. A rubber composition described above in any one of 1. to 10., wherein the modified polybutadiene has a ratio of a weight-average molecular weight (Mw) to a number-average molecular weight (Mn), (Mw)/(Mn), of 1.6 to 3.5;
12. A rubber composition described above in any one of 1. to 11., wherein the modified polybutadiene rubber has a number-average molecular weight (Mn) of 100,000 to 500,000;
13. A rubber composition described above in 12, wherein the modified polybutadiene rubber has a number-average molecular weight (Mn) of 150,000 to 300,000;
14. A rubber composition described above in any one of 1. to 13., which can be crosslinked with sulfur; and
15. A tire which uses a rubber composition described in any one of 1. to 14. for a sidewall.

In accordance with the present invention, the rubber composition exhibiting excellent low heat buildup property and resistance to fracture and the tire using the rubber composition for a sidewall can be provided.

## BRIEF DESCRIPTION OF THE DRAWINGS

Figure 1 shows a diagram exhibiting a calibration curve for calculating the fraction of the modified chain end in an embodiment of the present invention.

## THE MOST PREFERRED EMBODIMENT TO CARRY OUT THE INVENTION

The modified polybutadiene rubber used in the rubber composition of the present invention is, preferably, obtained by modifying a polymer having active chain ends, which is obtained by polymerizing 1,3-butadiene in an organic solvent using a catalyst comprising a compound having a rare earth element of the lanthanoid series, with a modifier, and it is necessary that the modified polybutadiene rubber have a content of cis-1,4 bond of 92% or greater, a content of vinyl bond of 1.5% or smaller and a fraction of modified chain end of 20% or greater. When the content of the cis-1,4-bond is smaller than 92% or the content of the vinyl bond exceeds 1.5%, the resistance to fracture and the resistance to cut growth of the modified polybutadiene rubber markedly decrease. When the fraction of the modified chain end is smaller than 20%, the object of improving the low heat buildup property and the resistance to fracture is not satisfied.
The fraction of the modified chain end of the modified polybutadiene rubber used in the rubber composition of the present invention is the fraction of the amount by mole of the group introduced for the modification based on the amount by mole of the polymer. The fraction of the modified chain end is 20% or greater, preferably 40% or greater, more preferably 60% or greater, still more preferably 80% or greater and most preferably 95% or greater. The content of the cis-1,4-bond in the modified polybutadiene rubber is 92% or greater, preferably 94% or greater, more preferably 97% or greater and most preferably 98% or greater. As described above, the rubber composition and the tire exhibiting the excellent heat buildup property and resistance to fracture can be obtained by using the modified polybutadiene rubber having the great content of the cis-1,4-bond and the great fraction of the modified chain end.
The fraction of the modified chain end will be described specifically in the following with reference to Figure 1.
In Figure 1, the vertical axis shows the value of UV/RI obtained by the measurement in accordance with the gel permeation chromatography (GPC). UV means the value of the peak area obtained from the absorbance of UV assigned to the modifier which has reacted with the polymer. RI means the value of the peak area obtained from the differential refractive index (RI) of the polymer itself.
The horizontal axis shows the value of $(1/Mn)\times10^3$, wherein Mn means the absolute molecular weight (the number-average molecular weight). In Figure 1, LowCisBR means polybutadiene rubber obtained in accordance with

the anionic polymerization using a Li-based catalyst and modified with a modifier which is 4,4'-bis(diethylaminobenzophenone) (referred to as DEAB, hereinafter). Three points are shown at different values of UV/RI corresponding to different values of the number-average molecular weight. The three points can be placed approximately on a straight line. Since the 100% modification can be achieved in the case of the anionic polymerization, the value of UV/RI for LowCisBR corresponds to the 100% modification. The value of UV/RI for LowCisBr is represented by A which is defined by the following equation:

$$UV(Li\text{-}Br)/RI(Li\text{-}Br)=A$$

On the other hand, for HighCisBR, which means the polybutadiene rubber of the present invention obtained in accordance with the coordination polymerization using a catalyst comprising a compound having a rare earth element of the lanthanoid series (Nd) and modified with DEAB, five points are shown at different values of UV/RI corresponding to different value of the number-average molecular weight. The five points can be placed approximately on a straight line similarly to the case of LowCisBR. In the case of the coordination polymerization, a portion of the living end is deactivated during the polymerization, and it is difficult that the 100% modification is achieved. The value of UV/RI is represented by B which is defined by the following equation:

$$UV(Nd\text{-}Br)/RI(Nd\text{-}Br)=B$$

Using A and B defined above, the fraction of the modified chain end in the present invention is defined as follows:

$$\text{Fraction of modified chain end} = B/A\times 100(\%)$$

The fraction of the modified chain end in the present invention is calculated from the values of A and B obtained by using LowCisBR and HighCisBR, respectively, having the same absolute molecular weight (the number-average molecular weight).

The fraction of the modified chain end of a polymer with no modification which is obtained by the reaction with isopropanol is set at 0. The value of UV/RI obtained by subtracting the value of the line of no modification shown in Figure 1 is used as the true value.

The values of A and B are shown in Figure 1.

The three straight lines shown in Figure 1 can be used as the calibration lines. For example, the fraction of the modified chain end in the present invention can be calculated when the absolute molecular weight Mn (the number-average molecular weight) of HighCisBR is known.

It is shown in Figure 1 that, as the absolute molecular weight Mn (the number-average molecular weight) increases, the fraction of the modified chain end decreases, and the modification with a modifier becomes more difficult.

When a different modifier is used, it is necessary that calibration lines specific for the used modifier be obtained.

Compounds of Components (a) to (h) used as the modifiers in the present invention will be described in the following.

In the present invention, Component (a) which is brought into reaction with the active chain end of the polymer is a modifier having a structure represented by general formula (I):

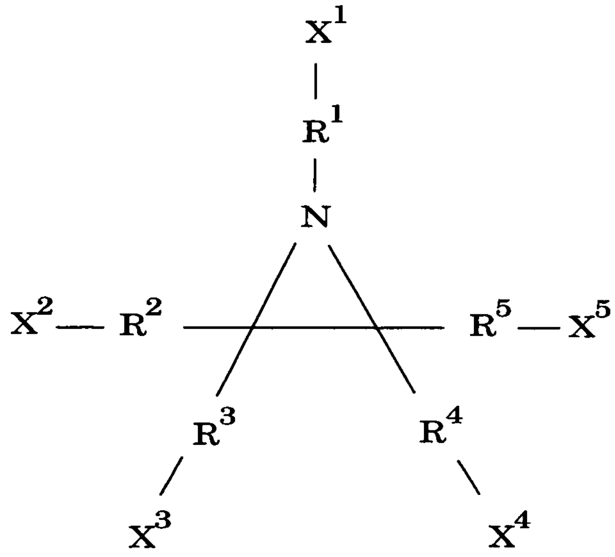

... (I)

In the above general formula (I), $X^1$ to $X^5$ each represent a monovalent functional group which has hydrogen atom or at least one atom or group selected from halogen atoms, carbonyl group, thiocarbonyl group, isocyanate group, thioisocyanate group, epoxy group, thioepoxy group, halogenated silyl group, hydrocarbyloxysilyl group and sulfonyl group and does not have any of active proton and onium salts, atoms and groups represented by $X^1$ to $X^5$ may be same with or different from each other, and at least one of $X^1$ to $X^5$ does not represent hydrogen atom.

$R^1$ to $R^5$ each independently represent a single bond or a divalent hydrocarbon group having 1 to 18 carbon atoms. Examples of the divalent hydrocarbon group include alkylene groups having 1 to 18 carbon atoms, alkenylene groups having 2 to 18 carbon atoms, arylene groups having 6 to 18 carbon atoms and aralkylene groups having 7 to 18 carbon atoms. Among these groups, alkylene groups having 1 to 18 carbon atoms are preferable, and alkylene groups having 1 to 10 carbon atoms are more preferable. The alkylene group may be any of linear, branched and cyclic groups. It is preferable that the alkylene group is a linear alkylene group. Examples of the linear alkylene group include methylene group, ethylene group, trimethylene group, tetramethylene group, pentamethylene group, hexamethylene group, octamethylene group and decamethylene group.

A plurality of aziridine rings may be bonded via any one of the groups represented by $X^1$ to $X^5$ and $R^1$ to $R^5$.

It is preferable that the compound of Component (a) is a compound represented by general formula (I) in which $X^1$ does not represent hydrogen atom when $R^1$ represents a single bond, and $R^1$ does not represent a single bond when $X^1$ represents hydrogen atom.

Examples of the modifier represented by general formula (I) include 1-acetylaziridine, 1-propionylaziridine, 1-butylaziridine, 1-isobutylaziridine, 1-valerylaziridine, 1-isovalerylaziridine, 1-pivaloylaziridine, 1-acetyl-2-methylaziridine, 2-methyl-1-propionylaziridine, 1-butyl-2-methylaziridine, 2-methyl-1-isobutylaziridine, 2-methyl-1-valerylaziridine, 1-isovaleryl-2-methylaziridine, 2-methyl-1-pivaloylaziridine, ethyl 3-(1-aziridinyl)propionate, propyl 3-(1-aziridinyl)propionate, butyl 3-(1-aziridinyl)propionate, ethylene glycol bis[3-(1-aziridinyl)propionate], trimethylpropane tris[-3-(1-aziridinyl) propionate], ethyl 3-(2-methyl-1-aziridinyl)propionate, propyl 3-(2-methyl-1-aziridinyl)propionate, butyl 3-(2-methyl-1-aziridinyl)propionate, ethylene glycol bis[3-(2-methyl-1-aziridinyl)propionate], trimethylolpropane tris[3-(2-methyl-1-aziridinyl)-propionate, neopentyl glycol bis[3-(1-aziridinyl)propionate], neopentyl glycol bis[3-(2-methyl-1-aziridinyl)propionate], di(1-aziridinylcarbonyl)-methane, 1,2-di(1-aziridinylcarbonyl)ethane, 1,3-di(1-aziridinylcarbonyl)-propane, 1,4-di(1-aziridinylcarbonyl)butane, 1,5-di(1-aziridinylcarbonyl)-pentane, di(2-methyl-1-aziridinylcarbonyl)methane, 1,2-di(2-methyl-1-aziridinylcarbonyl)ethane, 1,3-di(2-methyl-1-aziridinylcarbonyl)propane and 1,4-di(2-methyl-1-aziridinylcarbonyl)butane. However, the modifier represented by general formula (I) is not limited to the compounds described above as the example.

In the present invention, Component (b) which is brought into reaction with the active chain end of the polymer is a modifier which is a halogenated organometallic compound or a halogenated metal compound represented by general formula (V):

$$R^6{}_nM'Z_{x-n} \qquad (V)$$

In the above formula, $R^6$ represents a hydrocarbon group having 1 to 20 carbon atoms, M' represents tin atom, silicon atom, germanium atom or phosphorus atom, Z represents a halogen atom, x represents the valence of the atom represented by M', and n represents an integer of 0 to (x-1).

When M' represents tin atom in the above general formula (V), examples of Component (b) include triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride and tin tetrachloride.

When M' represents silicon atom in the above general formula (V), examples of Component (b) include triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyldichlorosilane, phenylchlorosilane, hexyltrichlorosilane, octyltrichlorosiliane, butyltrichlorosilane, methyltrichlorosilane and silicon tetrachloride.

When M' represents germanium atom in the above general formula (V), examples of Component (b) include triphenylgermanium chloride, dibutylgermanium dichloride, diphenylgermanium dichloride, butylgermanium trichloride and germanium tetrachloride. When M' represents phosphorus atom in the above general formula (V), examples of Component (b) include phosphorus trichloride.

In the present invention, as Component (b), organometallic compounds having ester groups represented by the following general formula (VI) in the molecule and organometallic compounds having carbonyl group represented by the following general formula (VII) in the molecule can be used as the modifier.

$$R^7_nM'(-R^8\text{-}COOR^9)_{x-n} \qquad (VI)$$

$$R^7_nM'(-R^8\text{-}COR^9)_{x-n} \qquad (VII)$$

In the above general formulae, $R^7$ to $R^8$ each represent a hydrocarbon group having 1 to 20 carbon atoms and may represent same groups or different groups, $R^9$ represents a hydrocarbon group having 1 to 20 carbon atoms which may have carbonyl group or ester group at a side chain, M' represents tin atom, silicon atom, germanium atom or phosphorus atom, x represents the valence of the atom represented by M', and n represents an integer of 0 to (x-1).

A plurality of Component (b) may be used in combination in any desired relative amounts.

In the present invention, the heterocumulene compound of Component (c) which is brought into reaction with the active chain end of the polymer is a modifier having a structure represented by general formula (VIII):

$$Y{=}C{=}Y' \text{ bond} \qquad (VIII)$$

In the above general formula, Y represents carbon atom, oxygen atom, nitrogen atom or sulfur atom, and Y' represents oxygen atom, nitrogen atom or sulfur atom.

Component (c) is a ketene compound when Y represents carbon atom and Y' represents oxygen atom; a thioketene compound when Y represents carbon atom and Y' represents sulfur atom; an isocyanate compound when Y represents nitrogen atom and Y' represents oxygen atom; a thioisocyanate compound when Y represents nitrogen atom and Y' represents sulfur atom; a carbodiimide compound when Y and Y' both represent nitrogen atom; carbon dioxide when Y and Y' both represent oxygen atom; carbonyl sulfide when Y represents oxygen atom and Y' represents sulfur atom; and carbon disulfide when Y and Y' both represent sulfur atom. However, Compound (c) is not limited to the combinations described above.

Among the above compounds, examples of the ketene compound include ethyl ketene, butyl ketene, phenyl ketene and toluyl ketene. Examples of the thioketene compound include ethylene thioketene, butyl thioketene, phenyl thioketene and toluyl thioketene. Examples of the isocyanate compound include phenyl isocyanate, 2,4-tolylene diisocyanate, 2,6-tolylene diisocyanate, diphenylmethane diisocyanate, diphenylmethane diisocyanates of the polymeric type and hexamethylene diisocyanate. Examples of the thioisocyanate compound include phenyl thioisocyanate, 2,4-tolylene dithioisocyanate and hexamethylene dithioisocyanate. Examples of the carbodiimide compound include N,N'-diphenylcarbodiimide and N,N'-diethylcarbodiimide.

In the present invention, the three-membered heterocyclic compound of Component (d) which is brought into reaction with the active chain end of the polymer is a modifier having a structure represented by general formula (II):

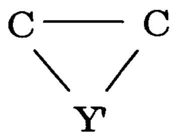

... (II)

wherein Y' represents -O-, -NH- or -S-.

Component (d) is, for example, an epoxy compound when Y' represents oxygen atom; an ethyleneimine derivative when Y' represents nitrogen atom; and a thiirane compound when Y' represents sulfur atom. Examples of the epoxy compound include ethylene oxide, propylene oxide, cyclohexene oxide, styrene oxide, epoxidized soy bean oil and epoxidized natural rubber. Examples of the ethyleneimine derivative include ethyleneimine, propyleneimine, N-phenylethyleneimine and N-(β-cyanoethyl)ethyleneimine. Examples of the thiirane compound include thiirane, methylthiirane and phenylthiirane.

In the present invention, the halogenated isocyano compound of Component (e) which is brought into reaction with the active chain end of the polymer is a modifier having a structure represented by general formula (IX):

-N=C-X bond (IX)

wherein X represents a halogen atom.

Examples of the halogenated isocyano compound of Component (e) include 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichoro-2-(methylthio)pyrimidine, 2,4,5,6-tetrachloropyrimidine, 2,4,6-trichloropyrimidine, 2-amino-6-chloropyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole and 2-chlorobenzoxazole.

In the present invention, the carboxylic acid, the acid halide, the ester compound, the carbonic acid ester compound and the acid anhydride of Component (f) which are brought into reaction with the active chain end of the polymer are modifiers having structures represented by general formulae (X) to (XIV) and (III):

$R^{10}$-$(COOH)_m$ (X)

$R^{11}(COZ)_m$ (XI)

$R^{12}$-(COO-$R^{13}$) (XII)

$R^{14}$-OCOO-$R^{15}$ (XIII)

$R^{16}$-(COOCO-$R^{17})_m$ (XIV)

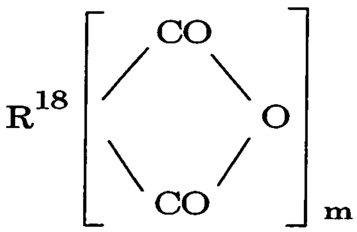

... (III)

wherein $R^{10}$ to $R^{18}$ each represent a hydrocarbon group having 1 to 50 carbon atoms and may represent same groups or different groups, Z represents a halogen atom, and m represents an integer of 1 to 5.

Among Component (f), examples of the carboxylic acid represented by general formula (X) include acetic acid, stearic acid, adipic acid, maleic acid, benzoic acid, acrylic acid, methacrylic acid, phthalic acid, isophthalic acid, terephthalic acid, trimellitic acid, pyromellitic acid, mellitic acid and products of partial or complete hydrolysis of polymethacrylic acid ester compounds and polyacrylic acid compounds.

Examples of the acid halide represented by general formula (XI) include acetyl chloride, propionyl chloride, butyroyl chloride, isobutyroyl chloride, octanoyl chloride, acryloyl chloride, benzoyl chloride, stearoyl chloride, phthaloyl chloride, maleic acid chloride, oxaphosphoric acid chloride, acetyl iodide, benzoyl iodide, acetyl fluoride and benzoyl fluoride.

Examples of the ester compound represented by general formula (XII) include ethyl acetate, ethyl stearate, diethyl adipate, diethyl malate, methyl benzoate, ethyl acrylate, ethyl methacrylate, diethyl phthalate, dimethyl terephthalate, tributyl trimellitate, tetraoctyl pyromellitate, hexaethyl mellitate, phenyl acetate, polymethyl methacrylate, polyethyl acrylate and polyisobutyl acrylate. Examples of the carbonic acid ester compound represented by general formula (XIII) include dimethyl carbonate, diethyl carbonate, dipropyl carbonate, dihexyl carbonate and diphenyl carbonate. Examples of the acid anhydride include acid anhydrides between molecules of the acids represented by general formula (XIV) such as acetic anhydride, propionic anhydride, isobutyric anhydride, isovaleric anhydride, heptanoic anhydride, benzoic anhydride and cinnamic anhydride; and acid anhydrides within the molecule of an acid represented by general formula (III) such as succinic anhydride, methylsuccinic anhydride, maleic anhydride, glutaric anhydride, citraconic anhydride, phthalic anhydride and copolymers of styrene and maleic anhydride.

The compound of Component (f) may be a coupling agent having a non-protonic polar group such as ether group and tertiary amino group in the molecule as long as the object of the present invention is not adversely affected. Component (f) may be used singly or as a mixture of two or more. Component (f) may comprise compounds having free alcohol group or phenol group as impurities. Component (f) may be used as a mixture comprising the above compound singly or in combination of two or more.

In the present invention, the metal salt of a carboxylic acid of Component (g) which is brought into reaction with the active chain end of the polymer is a modifier having a structure represented by one of general formulae (XV), (XVI) and (IV):

$$R^{19}{}_{k}M''(OCOR^{20})_{4-k} \qquad (XV)$$

$$R^{21}{}_{k}M''(OCO\text{-}R^{22}\text{-}COOR^{23})_{4-k} \qquad (XVI)$$

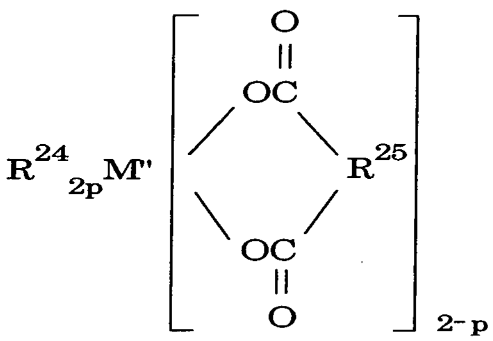

... (IV)

wherein $R^{19}$ to $R^{25}$ each represent a hydrocarbon group having 1 to 20 carbon atoms and may represent same groups or different groups, M" represents tin atom, silicon atom or germanium atom, k represents an integer of 0 to 3, and p represents 0 or 1.

Examples the compound represented by general formula (V) among the compounds of Component (g) include triphenyltin laurate, triphenyltin 2-ethylhexanoate, triphenyltin naphthenate, triphenyltin acetate, triphenyltin acrylate, tri-n-butyltin laurate, tri-n-butyltin 2-ethylhexanoate, tri-n-butyltin naphthenate, tri-n-butyltin acetate, tri-n-butyltin acrylate, tri-t-butyltin laurate, tri-t-butyltin 2-ethylhexanoate, tri-t-butyltin naphthenate, tri-t-butyltin acetate, tri-t-butyltin acrylate, triisobutyltin laurate, triisobutyltin 2-ethylhexanoate, triisobutyltin naphthenate, triisobutyltin acetate, triisobutyltin acrylate, triisopropyltin laurate, triisopropyltin 2-ethylhexanoate, triisopropyltin naphthenate, triisopropyltin acetate, triisopropyltin acrylate, trihexyltin laurate, trihexyltin 2-ethylhexanoate, trihexyltin acetate, trihexyltin acrylate, trioctyltin laurate, trioctyltin 2-ethylhexanoate, trioctyltin naphthenate, trioctyltin acetate, trioctyltin acrylate, tri-2-ethylhexyltin laurate, tri-2-ethylhexyltin 2-ethylhexanoate, tri-2-ethylhexyltin naphthenate, tri-2-ethylhexyltin acetate, tri-2-ethylhexyltin acrylate, tristearyltin laurate, tristearyltin 2-ethylhexanoate, tristearyltin naphthenate, tristearyltin acetate, tristearyltin acrylate, tribenzyltin laurate, tribenzyltin 2-ethylhexanoate, tribenzyltin naphthenate, tribenzyltin acetate, tribenzyltin acrylate,

diphenyltin dilaurate, diphenyltin di-2-ethylhexanoate, diphenyltin distearate, diphenyltin dinaphthenate, diphenyltin diacetate, diphenyltin diacrylate, di-n-butyltin dilaurate, di-n-butyltin di-2-ethylhexanoate, di-n-butyltin distearate, di-n-butyltin dinaphthenate, di-n-butyltin diacetate, di-n-butyltin diacrylate, di-t-butyltin dilaurate, di-t-butyltin di-2-ethylhexanoate, di-t-butyltin distearate, di-t-butyltin dinaphthenate, di-t-butyltin diacetate, di-t-butyltin diacrylate, diisobutyltin dilaurate, diisobutyltin di-2-ethylhexanoate, diisobutyltin distearate, diisobutyltin dinaphthenate, diisobutyltin diacetate, diisobutyltin diacrylate, diisopropyltin dilaurate, diisopropyltin 2-ethylhexanoate, diisopropyltin distearate, diisopropyltin dinaphthenate, diisopropyltin diacetate, diisopropyltin diacrylate, dihexyltin dilaurate, dihexyltin di-2-ethylhexanoate, dihexyltin distearate, dihexyltin dinaphthenate, dihexyltin diacetate, dihexyltin diacrylate, di-2-ethylhexyltin dilaurate, di-2-ethylhexyltin 2-ethylhexanoate, di-2-ethylhexyltin distearate, di-2-ethylhexyltin dinaphthenate, di-2-ethylhexyltin diacetate, di-2-ethylhexyltin diacrylate, dioctyltin dilaurate, dioctyltin di-2-ethylhexanoate, dioctyltin distearate, dioctyltin dinaphthenate, dioctyltin diacetate, dioctyltin diacrylate, distearyltin dilaurate, distearyltin di-2-ethylhexanoate, distearyltin distearate, distearyltin dinaphthenate, distearyltin diacetate, distearyltin diacrylate, dibenzyltin dilaurate, dibenzyltin di-2-ethylhexanoate, dibenzyltin distearate, dibenzyltin dinaphthenate, dibenzyltin diacetate, dibenzyltin diacrylate, phenyltin trilaurate, phenyltin tri-2-ethylhexanoate, phenyltin trinaphthenate, phenyltin triacetate, phenyltin triacrylate, n-butyltin trilaurate, n-butyltin tri-2-ethylhexanoate, n-butyltin trinaphthenate, n-butyltin triacetate, n-butyltin triacrylate, t-butyltin trilaurate, t-butyltin tri-2-ethylhexanoate, t-butyltin trinaphthenate, t-butyltin triacetate, t-butyltin triacrylate, isobutyltin trilaurate, isobutyltin tri-2-ethylhexanoate, isobutyltin trinaphthenate, isobutyltin triacetate, isobutyltin triacrylate, isopropyltin trilaurate, isopropyltin tri-2-ethylhexanoate, isopropyltin trinaphthenate, isopropyltin triacetate, isopropyltin triacrylate, hexyltin trilaurate, hexyltin tri-2-ethylhexanoate, hexyltin trinaphthenate, hexyltin triacetate, hexyltin triacrylate, octyltin trilaurate, octyltin tri-2-ethylhexanoate, octyltin trinaphthenate, octyltin triacetate, octyltin triacrylate, 2-ethylhexyl- tin trilaurate, 2-ethylhexyltin tri-2-ethylhexanoate, 2-ethylhexyltin trinaphthenate, 2-ethylhexyltin triacetate, 2-ethylhexyltin triacrylate, stearyltin trilaurate, stearyltin tri-2-ethylhexanoate, stearyltin trinaphthenate, stearyltin triacetate, stearyltin triacrylate, benzyltin trilaurate, benzyltin tri-2-ethylhexanoate, benzyltin trinaphthenate, benzyltin triacetate and benzyltin triacrylate.

Examples of the compound represented by general formula (XVI) include diphenyltin bismethylmalate, diphenyltin bis-2-ethylhexanoate, diphenyltin bisoctylmalate, diphenyltin bisbenzylmalate, di-n-butyltin bismethylmalate, di-n-butyltin bis-2- ethylhexanoate, di-n-butyltin bisoctylmalate, di-n-butyltin bisbenzyl- malate, di-t-butyltin bismethylmalate, di-t-butyltin bis-2-ethylhexanoate, di-t-butyltin bisoctylmalate, di-t-butyltin bisbenzylmalate, diisobutyltin bismethylmalate, diisobutyltin bis-2-ethylhexanoate, diisobutyltin bisoctylmalate, diisobutyltin bisbenzylmalate, diisopropyltin bismethylmalate, diisopropyltin bis-2-ethylhexanoate, diisopropyltin bisoctylmalate, diisopropyltin bisbenzylmalate, dihexyltin bismethylmalate, dihexyltin bis-2-ethylhexanoate, dihexyltin bisoctyhnalate, dihexyltin bisbenzylmalate, di-2-ethylhexyltin bismethylmalate, di-2-ethylhexyltin bis-2-ethylhexanoate, di-2-ethylhexyltin bisoctylmalate, di-2-ethylhexyltin bisbenzylmalate, dioctyltin bismethylmalate, dioctyltin bis-2-ethylhexanoate, dioctyltin bisoctylmalate, dioctyltin bisbenzylmalate, distearyltin bismethylmalate, distearyltin bis-2-ethylhexanoate, distearyltin bisoctylmalate, distearyltin bisbenzylmalate, dibenzyltin bismethylmalate, dibenzyltin bis-2-ethylhexanoate, dibenzyltin bisoctylmalate, dibenzyltin bisbenzylmalate, diphenyltin bismethyladipate, diphenyltin bis-2-ethylhexanoate, diphenyltin bisoctyladipate, diphenyltin bisbenzyladipate, di-n-butyltin bismethyladipate, di-n-butyltin bis-2-ethylhexanoate, di-n-butyltin bisoctyladipate, di-n-butyltin bisbenzyladipate, di-t-butyltin bismethyladipate, di-t-butyltin bis-2-ethylhexanoate, di-t-butyltin bisoctyl- adipate, di-t-butyltin bisbenzyladipate, diisobutyltin bismethyladipate, diisobutyltin bis-2-ethylhexanoate, diisobutyltin bisoctyladipate, diisobutyl- tin bisbenzyladipate, diisopropyltin bismethyladipate, diisopropyltin bis-2-ethylhexanoate, diisopropyltin bisoctyladipate, diisopropyltin bisbenzyladipate, dihexyltin bismethyladipate, dihexyltin bis-2-ethylhexanate, dihexyltin bismethyladipate, dihexyltin bisbenzyladipate, di-2-ethylhexyltin bismethyladipate, di-2-ethylhexyltin bis-2-ethylhexanate, di-2-ethylhexyl- tin bisoctyladipate, di-2-ethylhexyltin bisbenzyladipate, dioctyltin bismethyladipate, dioctyltin bis-2-ethylhexanate, dioctyltin bisoctyladipate, dioctyltin bisbenzyladipate, distearyltin bismethyladipate, distearyltin bis-2-ethylhexanate, distearyltin bisoctyladipate, distearyltin bisbenzyladipate, dibenzyltin bismethyladipate, dibenzyltin bis-2-ethylhexanate, dibenzyltin bisoctyladipate and dibenzyltin bisbenzyladipate.

Examples of the compound represented by general formula (IV) include diphenyltin malate, di-n-butyltin malate, di-t-butyltin malate, diisobutyltin malate, diisopropyltin malate, dihexyltin malate, di-2-ethylhexyltin malate, dioctyltin malate, distearyltin malate, dibenzyltin malate, diphenyltin adipate, di-n-butyltin adipate, di-t-butyltin adipate, diisobutyltin adipate, diisopropyltin adipate, dihexyltin diacetate, di-2-ethylhexyltin adipate, dioctyltin adipate, distearyltin adipate and dibenzyltin adipate.

In the present invention, the metal salt of a carboxylic acid of Component (h) which is brought into reaction with the active chain end of the polymer is a modifier comprising an N-substituted aminoketone, an N-substituted aminothioketone, an N-substituted aminoaldehyde, an N-substituted aminothioaldehyde or a compound having -C-(=M)-N< bond in a molecule, M representing oxygen atom or sulfur atom.

Example of Component (h) include N-substituted aminoketones such as 4-dimethylaminoacetophenone, 4-diethylaminoacetophenone, 1,3-bis(diphenylamino)-2-propanone, 1,7-bis(methylethylamino)-4-heptanone, 4-dimethylaminobenzophenone, 4-diethylaminobenzophenone, 4-di-t-butylaminobenzophenone, 4-diphenylaminobenzophenone, 4,4'-bis-(dimethylamino)benzophenone, 4,4'-bis(diethylamino)- benzophenone and 4,4'-bis(diphenylamino)benzophenone; N-substituted aminothioketones corresponding to the N-substituted aminoketones, N-substituted aminoaldehydes such as 4-dimethylaminobenzaldehyde, 4-diphenylaminobenzaldehyde and 4-divinylaminobenzaldehyde; N-substituted aminothioaldehydes corresponding to the N-substituted aminoaldehydes; and compounds having -C-(=$Y^1$)-N< bond in a molecule, $Y^1$ representing oxygen atom or sulfur atom, examples of which include N-substituted lactams such as N-methyl-β-propiolactam, N-phenyl-β-propiolactam, N-methyl-2- pyrrolidone, N-phenyl-2-pyrrolidone, N-t-butyl-2-pyrrolidone, N-phenyl-5-methyl-2-pyrrolidone, N-methyl-2-piperidone, N-phenyl-2-piperidone, N-methyl-ε-caprolactam, N-phenyl-ε-caprolactam, N-methyl-(ω-caprolactam, N-phenyl-ω-caprolactam, N-methyl-ω-laurylolactam and N-vinyl-ω-laurylolactam; N-substituted thiolactams corresponding to the N-substituted lactams; N-substituted cyclic ureas such as 1,3-dimethylethyleneurea, 1,3-divinylethyleneurea, 1,3-diethyl-2-imidazolidinone, 1-methyl-3-ethyl-2-imidazohdinone and 1,3-dimethyl-2-imidazolidinone; and N-substituted cyclic thioureas corresponding to the N-substituted cyclic ureas.

The modifiers of Components (a) to (h) may be used singly or as a mixture of two or more.

As for the amount of the modifier, the ratio of the amount by mole of the modifier to the amount by mole of Component (A) of the polymerization system described below is 0.1 to 100 and preferably 1.0 to 50 although the ratio is different depending on the fraction of the modified chain end of the obtained modified polymer. When the amount of the modifier is in the above range, the reaction of modification proceeds, and the polybutadiene rubber forming no fraction insoluble in toluene (gel) and providing excellent low heat buildup property and resistance to fracture can be obtained.

The reaction of modification is conducted under stirring, in general, at a temperature of the room temperature to 100°C for 5 minutes to 2 hours and preferably for 3 minutes to 1 hour. A polybutadiene rubber having a great fraction of the modified chain end can be obtained by conducting the reaction of modification immediately after the polymerization is conducted using a catalyst under a condition such that a great fraction of the living chain end can be obtained.

The catalyst system used for the polymerization to provide the polymer having active chain ends in the present invention will be described in the following.

It is preferable that 1,3-butadiene is polymerized using a catalyst system comprising:

Component (A): a compound having a rare earth element having an atomic number of 57 to 71 in the Periodic Table or a reaction product of said compound with a Lewis base;

Component (B): an organoaluminum compound represented by the following formula (XVII):

$$AlR^{26}R^{27}R^{28} \qquad (XVII)$$

wherein $R^{26}$ and $R^{27}$ each represent hydrogen atom or a hydrocarbon group having 1 to 10 carbon atoms and may represent the same atom or group or different atom and groups, and $R^{28}$ represents a hydrocarbon group having 1 to 10 carbon atoms, which may be the same with or different from the groups represented by $R^{26}$ and $R^{27}$; and

Component (C): at least one of Lewis acids, complex compounds of metal halide compounds and Lewis bases and organic compounds having an active halogen.

In the present invention, it is preferable that the catalyst system used for the polymerization to provide the polymer having active chain ends further comprises an organoaluminumoxy compound, which is a so-called aluminoxane, as Component (D) in combination with Components (A) to (C) described above. It is more preferable that the catalyst system is prepared preliminarily in the presence of Component (A), Component (B), Component (C), Component (D) and the conjugated diene monomer.

In the present invention, Component (A) of the catalyst system used for the polymerization providing the polymer having active chain ends is a compound having a rare earth element having an atomic number of 57 to 71 in the Periodic Table or a reaction product of said compound with a Lewis base. Among the rare earth elements having an atomic number of 57 to 71, neodymium, praseodymium, cerium, lanthanum, gadolinium and mixtures of these elements are preferable, and neodymium is more preferable.

As the compound having a rare earth element, salts soluble in hydrocarbon solvents are preferable. Examples of the salt include carboxylic acid salts, alkoxides, β-diketone complex compounds, phosphoric acid salts and phosphorous acid salts of the above rare earth elements. Among these salts, carboxylic acid salts and phosphoric acid salts are preferable, and carboxylic acid salts are more preferable.

Examples of the hydrocarbon solvent include saturated aliphatic hydrocarbons having 4 to 10 carbon atoms such as butane, pentane, hexane and heptane, saturated alicyclic hydrocarbons having 5 to 20 carbon atoms such as cyclopentane and cyclohexane, monoolefins such as 1-butene and 2-butene, aromatic hydrocarbons such as benzene, toluene and xylene, and halogenated hydrocarbons such as methylene chloride, chloroform, trichloroethylene, perchloroethylene, 1,2-dichloroethane, chlorobenzene, bromobenzene and chlorotoluene.

Examples of the carboxylic acid salt of the rare earth element include compounds represented by the following general formula (XVIII):

$(R^{29}\text{-}CO_2)_3M$ (XVIII)

wherein, $R^{29}$ represents a hydrocarbon group having 1 to 20 carbon atoms, and M represents a rare earth element having an atomic number of 57 to 71 in the Periodic Table. $R^{29}$ may represent a saturated group or an unsaturated group. It is preferable that $R^{29}$ represents an alkyl group or an alkenyl group, which may be any of linear, branched and cyclic groups. The carboxyl group is bonded to a primary, secondary or tertiary carbon atom. Examples of the carboxylic acid salt include salts of octanoic acid, 2-ethylhexanoic acid, oleic acid, neodecanoic acid, stearic acid, benzoic acid, naphthenic acid, Versatic acid [a trade name; manufactured by SHELL KAGAKU Co. Ltd.; a carboxylic acid in which carboxyl group is bonded to a tertiary carbon atom]. Among these salts, salts of 2-ethylhexanoic acid, neodecanoic acid, naphthenic acid and Versatic acid are preferable.

Examples of the alkoxide of the rare earth element include compounds represented by the following general formula (XIX):

$(R^{30}O)_3M$ (XIX)

wherein $R^{30}$ represents a hydrocarbon group having 1 to 20 carbon atoms, and M represents a rare earth element having an atomic number of 57 to 71 in the Periodic Table. Examples of the alkoxy group represented by $R^{30}O$ include 2-ethylhexyloxy group, oleyloxy group, strearyloxy group, phenoxy group and benzyloxy group. Among these groups, 2-ethylhexyloxy group and benzyloxy group are preferable.

Examples of the β-diketone complex of the rare earth element include acetylacetone complex compounds, benzoylacetone complex compounds, propionitrileacetone complex compounds, valerylacetone complex compounds and ethylacetylacetone complex compounds of the rare earth elements described above. Among these compounds, acetylacetone complex compounds and ethylacetylacetone complex compounds are preferable.

Examples of the phosphoric acid salt and the phosphorous acid salt of the rare earth element described above include salts of the rare earth elements described above with bis(2-ethylhexyl) phosphate, bis(1-methylheptyl) phosphate, bis(p-nonylphenyl) phosphate, bis(polyethylene glycol p-nonylphenyl) phosphate, (1-methylheptyl)(2-ethylhexyl) phosphate, (2-ethylhexyl)(p-nonylphenyl) phosphate, mono-2-ethylhexyl 2-ethylhexylphosphonate, mono-p-nonylphenyl 2-ethylhexylphosphonate, bis(2-ethylhexyl)phosphinic acid, bis(1-methylheptyl)phosphinic acid, bis(p-nonylphenyl)phosphinic acid, (1-methylheptyl)(2-ethylhexyl)phosphinic acid and (2-ethylhexyl)(p-nonylphenyl)phosphinic acid. Among the above salts, salts of the rare earth element described above with bis(2-ethylhexyl) phosphate, bis(1-methylheptyl) phosphate, mono-2-ethylhexyl 2-ethylhexylphosphonate and bis(2-ethylhexyl)phosphinic acid are preferable.

Among the above compounds having a rare earth element, phosphoric acid salts of neodymium and carboxylic acid salts of neodymium are preferable, and branched carboxylic acid salts of neodymium such as 2-ethylhexanoic acid salt of neodymium, neodecanoic acid salt of neodymium and Versatic acid salt of neodymium are more preferable.

Component (A) may be a reaction product of the compound having a rare earth element described above and a Lewis base. When the reaction product is used as Component (A), the solubility of the compound having a rare earth element in solvents is improved by the Lewis base, and the reaction product can be stored for a long time with stability. The Lewis base for providing the easy solubility and the stability during storage for a long time to the compound having a rare earth element is used as a mixture containing 0 to 30 moles and preferably 1 to 10 moles of the Lewis base per 1 mole of the rare earth element or as a product of the reaction of the two components conducted in advance. Examples of the Lewis base include acetylacetone, tetrahydrofuran, pyridine, N,N-dimethylformamide, thiophene, diphenyl ether, triethylamine, organophosphorus compounds and monohydric and dihydric alcohols.

The compound having a rare earth element or the reaction product of the compound having a rare earth element with the Lewis base of Component (A) may be used singly or as a mixture of two or more.

In the present invention, examples of the organoaluminum compound represented by the general formula (XVII) which is Component (B) in the catalyst system used for the polymerization for providing the polymer having active chain ends include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum, diethylaluminum hydride, di-n-propylaluminum hydride, di-n-butylaluminum hydride, diisobutylaluminum hydride, dihexylaluminum hydride, diisohexylaluminum hydride, diocotylaluminum hydride, diisooctylaluminum hydride, ethylaluminum dihydride, n-propylaluminum dihydride and isobutylaluminum dihydride. Among these compounds, triethylaluminum, triisobutylaluminum, diethylaluminum hydride and diisobutylaluminum hydride are preferable. The organoaluminum compound of Component (B) described above may be used singly or as a mixture of two or more.

In the present invention, Component (C) of the catalyst system used for the polymerization for providing the polymer having active chain ends is at least one halogen compound selected from the group consisting of Lewis acids, complex compounds of metal halides and Lewis bases and organic compounds having an active halogen.

The Lewis acid exhibits the Lewis acidity and is soluble in hydrocarbons. Examples of the Lewis acid include methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride and silicon tetrachloride. Among these compounds, diethylaluminum chloride, ethylaluminum sesquichloride, ethylaluminum dichloride, diethylaluminum bromide, ethylaluminum sesquibromide and ethylaluminum dibromide are preferable.

Reaction products of an alkylaluminum and a halogen such as the reaction product of triethylaluminum and bromine can also be used.

Examples of the metal halide constituting the complex compound of the metal halide and the Lewis base described above include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide and gold bromide. Among these metal halides, magnesium chloride, calcium chloride, barium chloride, manganese chloride, zinc chloride and copper chloride are preferable, and magnesium chloride, manganese chloride, zinc chloride and copper chloride are more preferable.

As the Lewis base constituting the complex compound of the metal halide and the Lewis base described above, phosphorus compounds, carbonyl compounds, nitrogen compounds, ether compounds and alcohols are preferable. Examples of the Lewis base include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, Versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol and lauryl alcohol. Among these compounds, tri-2-ethylhexyl phosphate, tricresyl phosphate, acetylacetone, 2-ethylhexanoic acid, Versatic acid, 2-ethylhexyl alcohol, 1-decanol and lauryl alcohol are preferable.

The Lewis base described above is brought into reaction, in general, in an amount of 0.01 to 30 moles and preferably in an amount of 0.5 to 10 moles per 1 mole of the metal halide described above. When the reaction product with the Lewis base is used, the amount of the metal left remaining in the polymer can be decreased.

Examples of the organic compound having an active halogen include benzyl chloride.

Examples of the aluminoxane of Component (D) include methylaluminoxane, ethylaluminoxane, propylaluminoxane, butylaluminoxane and chloroaluminoxane. By adding the aluminoxane of Component (D), the molecular weight distribution is made sharp, and the activity of the catalyst is increased.

The composition, i.e., the relative amounts of the components, of the catalyst system used in the present invention can be suitably selected in accordance with the object or the necessity. It is preferable that Component (A) is used in an amount of 0.00001 to 1.0 mmole and more preferably 0.0001 to 0.5 mmole per 100 g of 1,3-butadiene. By adjusting the amount of Component (A) in the above range, the polymerization exhibits excellent activity, and the step of removing ashes is can be eliminated.

The ratio of the amount of by mole of Component (A) to the amount by mole of Component (B) [Component (A):Component (B)] is, in general, 1:1 to 1:700 and preferably 1:3 to 1:500.

The ratio of the amount by mole of the halogen in Component (A) to the amount by mole of the halogen in Component (B) is, in general, 1:0.1 to 1:30, preferably 1:0.2 to 1:15 and most preferably 1:2.0 to 1:5.0.

The ratio of the amount by mole of aluminum in Component (D) to the amount by mole of Component (A) is, in general, 1:1 to 700:1 and preferably 3:1 to 500:1. The composition, i.e., the relative amounts of the components, of the catalyst system in the above ranges is preferable since the catalyst exhibits great activity, and the step of removing catalyst residues can be eliminated.

The polymerization may be conducted in the presence of hydrogen gas in combination with Components (A) to (C) so that the molecular weight of the polymer is adjusted.

In addition to Components (A), (B) and (C) and Component (D) which is used where necessary, conjugated diene compound such as 1,3-butadiene may be used as a component of the catalyst in a small amount, i.e., in an amount of 0 to 1,000 moles per 1 mole of the compound of Component (A), where necessary. Although the conjugated diene compound such as 1,3-butadiene is not essential as the component of the catalyst, the use of the conjugated diene compound in combination exhibits the advantage of further increasing the catalyst activity.

For the preparation of the catalyst described above, for example, Components (A) to (C) are dissolved in a solvent, and the conjugated diene compound such as 1,3-butadiene is brought into the reaction, where necessary.

In the preparation of the catalyst, the order of addition of the components is not particularly limited. The aluminoxane may be further added as Component (D). From the standpoint of increasing the catalyst activity and decreasing the induction period before the initiation of the polymerization, it is preferable that the above components are mixed, brought into reaction with each other and aged in advance.

The temperature of the aging is about 0 to 100°C and preferably 20 to 80°C. When the temperature of the aging is lower than 0°C, the aging is not achieved sufficiently. When the temperature of the aging exceeds 100°C, there is the possibility that the catalyst activity decreases and the molecular weight distribution becomes wide.

The time of the aging is not particularly limited. The aging can be sufficiently achieved by bringing the components into contact with each other in the line before being added into the polymerization reactor. In general, a time of the aging of 0.5 minutes or longer is sufficient, and the prepared catalyst is stable for several days.

In the preparation of the polymer having active chain ends, the polymer can be obtained by the solution polymerization of 1,3-butadiene in an organic solvent using the catalyst comprising the compound having the rare earth element of the lanthanoid series described above. As the organic solvent, an inert organic solvent is used. Examples of the inert organic solvent include saturated aliphatic hydrocarbons having 4 to 10 carbon atoms such as butane, pentane, hexane and heptane, saturated alicyclic hydrocarbons having 5 to 20 carbon atoms such as cyclopentane and cyclohexane, monoolefins such as 1-butene and 2-butene, aromatic hydrocarbons such as benzene, toluene and xylene, and halogenated hydrocarbons such as methylene chloride, chloroform, carbon tetrachloride, trichloroethylene, perchloroethylene, 1,2-dichloroethane, chlorobenzene, bromobenzene and chlorotoluene.

Among the above solvents, aliphatic hydrocarbons and alicyclic hydrocarbons, which have 5 or 6 carbon atoms, are preferable. The solvent may be used singly or as a mixture of two or more. It is preferable that the concentration of 1,3-butadiene of the monomer used in the polymerization in the solvent is 5 to 50% by mass and more preferably 10 to 30% by mass.

In the present invention, it is preferable that the temperature in the polymerization for providing the polymer having active chain ends is selected in the range of -80 to 150°C and more preferably in the range of -20 to 120°C. The polymerization can be conducted under the pressure formed by the reaction. In general, it is preferable that the operation is conducted under a pressure which is sufficient for keeping the monomer substantially at the liquid state. The pressure is different depending on the substances used for the polymerization, the solvent used for the polymerization and the temperature. A higher pressure may be used, where desired. The pressure can be obtained in accordance with a suitable method such as addition of the pressure to the reactor with a gas inert to the polymerization. In the polymerization, it is preferable that the entire raw materials taking part in the polymerization such as the polymerization catalyst, the solvent and the monomer are used after substances adversely affecting the reaction such as water, oxygen, carbon dioxide and protonic compounds are removed.

The preparation of the polymer having active chain ends may be conducted in accordance with any of the batch reaction and the continuous reaction.

In the present invention, the modifier selected from Components (a) to (h) is added to the polymer having active chain ends obtained as described above preferably in the stoichiometric amount or more and brought into reaction with the active chain ends of the polymer.

In the present invention, conventional antioxidants and an alcohol for terminating the polymerization can be added after the modification, where necessary.

After the modification described above, conventional post treatments such as removal of the solvent are conducted, and the modified polybutadiene rubber of the object substance can be obtained.

It is preferable that the Mooney viscosity ($ML_{1+4}$, 100°C) of the modified polybutadiene is 10 to 150 and more preferably 15 to 100. When the Mooney viscosity is smaller than 10, the sufficient physical properties such as the excellent resistance to fracture are not obtained. When the Mooney viscosity exceeds 150, workability becomes poor, and mixing with compounding ingredients becomes difficult.

It is preferable that the modified polybutadiene rubber used in the rubber composition of the present invention has a ratio of the weight-average molecular weight (Mw) to the number-average molecular weight (Mn) [(Mw/Mn)], i.e., the molecular weight distribution (Mw/Mn), in the range of 1.6 to 3.5 and more preferably in the range of 1.6 to 2.7.

When the molecular weight distribution (Mw/Mn) of the modified polybutadiene rubber is in the above range, workability of the rubber composition is not adversely affected by the use of the modified polybutadiene rubber in the rubber composition, and the mixing can be conducted easily. Therefore, the physical properties of the rubber composition can be sufficiently improved.

It is preferable that the modified polybutadiene rubber used in the rubber composition of the present invention has a number-average molecular weight in the range of 100,000 to 500,000 and more preferably in the range of 150,000 to 300,000. When the number-average molecular weight of the modified polybutadiene rubber is in the above range, excellent abrasion resistance can be achieved while the decrease in the modulus and the increase in the hysteresis loss of the vulcanizate are suppressed, and excellent workability can be obtained in the mixing of the rubber composition comprising the modified polybutadiene rubber. When the number-average molecular weight exceeds 500,000, there is the possibility that the essential requirement of the present invention that the fraction of the modified chain end of the

modified polybutadiene rubber be 20% or greater is not satisfied.

In the rubber composition of the present invention, it is necessary that the rubber component comprise the modified polybutadiene rubber in an amount of 20 to 80 parts by mass per 100 parts by mass of the rubber component. When the content of the modified polybutadiene rubber in the rubber component is 20 parts by mass or greater per 100 parts by mass of the rubber component, the excellent interaction with fillers can be exhibited. When the content of natural rubber and/or at least one other diene-based synthetic rubber is 20 parts by mass or greater, the effect of blending with these rubbers can be exhibited. It is preferable that the amount of the modified polybutadiene rubber in the rubber component is 30 to 80 parts by mass and more preferably 40 to 80 parts by mass per 100 parts by mass of the rubber component.

The modified polybutadiene rubber may be used singly or in combination of two or more. Examples of the rubber used in combination with the modified polybutadiene rubber include natural rubber and other diene-based synthetic rubbers. Examples of the other diene-based synthetic rubber include styrene-butadiene copolymers (SBR), polybutadiene (BR), polyisoprene (IR), butyl rubber (IIR), ethylene propylene copolymers and mixtures of these rubbers. It is more preferable that at least a portion of the other diene-based synthetic rubber is a diene-based modified rubber having a branched structure obtained by using a modifier of the polyfunctional type such as tin tetrachloride.

The rubber composition of the present invention may comprise carbon black or a combination of carbon black and inorganic fillers, where necessary, as the reinforcing filler. Carbon black is not particularly limited and may be selected as desired from carbon blacks conventionally used as the reinforcing filler of rubber. Examples of carbon black include GPF, FEF, SRF, HAF and IISAF. The specific surface area by nitrogen absorption of carbon black is 20 to 100 $m^2/g$, preferably 20 to 90 $m^2/g$ and most preferably 30 to 90 $m^2/g$. The amount of carbon black is 10 to 70 parts by mass and preferably 30 to 65 parts by mass per 100 parts by mass of the rubber component. The effect of improving physical properties can be exhibited by using carbon black in the amount in the above range. HAF and FEF exhibiting excellent resistance to fracture are preferable.

As the inorganic filler, silica and/or compounds represented by the following general formula (XVIII):

$$mM^1 \cdot xSiOy \cdot zH_2O \qquad (XVIII)$$

can be used.

In the above general formula (XVIII), $M^1$ represents at least one substance selected from metals of aluminum, magnesium, titanium, calcium and zirconium, oxides and hydroxides of the metals, hydrates thereof and carbonates of the metals, m, x, y and z represent an integer of 1 to 5, an integer of 0 to 10, an integer of 2 to 5 and an integer of 0 to 10, respectively. When both x and z represent 0 in the above general formula, the inorganic compound is at least one metal selected from aluminum, magnesium, titanium, calcium and zirconium, oxide of the metal or hydroxide of the metal.

As the inorganic filler represented by general formula (XVIII), alumina ($Al_2O_3$) such as $\gamma$-alumina and $\alpha$-alumina, alumina hydrates ($Al_2O_3 \cdot H_2O$) such as behmite, diaspore, aluminum hydroxide [$Al(OH)_3$] such as gibsite and bialite, aluminum carbonate [$Al_2(CO_3)_2$], magnesium hydroxide [$Mg(OH)_2$], magnesium oxide (MgO), magnesium carbonate ($MgCO_3$), talc ($3MgO.4SiO_2.H_2O$), attapulgite ($5MgO.8SiO_2 \cdot 9H_2O$), titanium white ($TiO_2$) titanium black ($TiO_{2n-1}$), calcium oxide (CaO), calcium hydroxide [$Ca(OH)_2$], alumimum magnesium oxide ($MgO \cdot Al_2O_3$), clay ($Al_2O_3 \cdot 2SiO_2$, kaolin ($Al_2O_3 \cdot 2SiO_2 \cdot 2H_2O$), pyrofilite ($Al_2O_3 \cdot 4SiO_2 \cdot H_2O$), bentonite ($Al_2O_3.4SiO_2.2H_2O$), aluminum silicate ($Al_2SiO_6$, $Al_4.3SiO_4.5H_2O$ etc.), magnesium silicate ($Mg_2SiO_4$, $MgSiO_3$ etc.), calcium silicate ($Ca_2 \cdot SiO_4$ etc.), aluminum calcium silicate ($Al_2O_3 \cdot CaO \cdot 2SiO_2$ etc.), magnesium calcium silicate ($CaMgSiO_4$, calcium carbonate ($CaCO_3$), zirconium oxide ($ZrO_2$), zirconium hydroxide [$ZrO(OH)_2 \cdot nH_2O$], zirconium carbonate [$Zr(CO_3)_2$] and crystalline aluminosilicates having hydrogen, an alkali metal or an alkaline earth metal for modifying the electric charge such as various types of zeolite, can be used. It is preferable that $M^1$ in the above general formula (XVIII) represents at least one substance selected from metals of aluminum, magnesium, titanium, calcium and zirconium, oxides and hydroxides of the metals, hydrates thereof and carbonates of the metals.

The inorganic compound represented by general formula (XVIII) described above may be used singly or as a mixture of two or more. The inorganic compound may be used as a mixture with silica.

In the present invention, silica is most preferable as the inorganic filler. Silica is not particularly limited and can be selected from various types of silica conventionally used as the reinforcing filler of rubber.

Examples of the silica include wet silica (silica hydrate), dry silica (anhydrous silica), calcium silicate and aluminum silicate. Among these substances, wet silica which simultaneously exhibits the effect of improving the resistance to fracture and the excellent wet grip property most remarkably is preferable.

In the present invention, when carbon black and the inorganic filler are used in combination, it is preferable from the standpoint of the performance that the ratio of the amount by mass of carbon black to the amount by mass of the inorganic filler is 95:5 to 5:95.

It is preferable that, when carbon black and the inorganic filler are used in combination, the entire amount of the reinforcing filler is 10 to 100 parts by mass per 100 parts by mass of the rubber component. When the entire amount

of the reinforcing filler is 10 parts by mass or more based on 100 parts by mass of the rubber component, the effect of improving the reinforcing property and other physical properties are sufficiently exhibited. When the entire amount of the reinforcing filler is 100 parts by mass or less, workability is excellent. When the reinforcing property, other physical properties ad workability are considered, it is more preferable that the entire amount of the reinforcing filler is in the range of 20 to 80 parts by mass and most preferably in the range of 25 to 70 parts by mass.

In the rubber composition of the present invention, when silica is used as the reinforcing filler, silane coupling agents may be used so that the reinforcing property of silica is further enhanced. Examples of the silane coupling agent include bis(3-triethoxysilylpropyl) tetrasulfide, bis(3-triethoxysilylpropyl) trisulfide, bis(3-triethoxysilylpropyl) disulfide, bis (2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 3-triethoxysilylethyl-N,N-dimethylthiocarbamoyl tetrasulfide, 3-trimethoxysilylpropylbenzothiazole tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide and dimethoxymethylsilylpropylbenzothiazol tetrasulfide. Among these silane coupling agents, bis(3-triethoxysilylpropyl) tetrasulfide and 3-trimethoxysilylpropylbenzothiazolyl tetrasulfide are preferable from the standpoint of the effect of improving the reinforcing property. The silane coupling agent may be used singly or in combination of two or more.

In the rubber composition of the present invention, the preferable amount of the silane coupling agent is different depending on the type of the coupling agent. It is preferable that the amount of the coupling agent is selected in the range of 1 to 20% by mass based on the amount of silica. When the amount is in the above range, the effect as the coupling agent is sufficiently exhibited, and gelation of the rubber component is suppressed. From the standpoint of the effect as the coupling agent and the effect of preventing gelation, it is more preferable that the amount of the coupling agent is in the range of 5 to 15% by mass.

The rubber composition of the present invention may further comprise various chemicals conventionally used in the rubber industry such as vulcanizing agents, vulcanization accelerators, process oils, antioxidants, antiscorching agents, zinc oxide and stearic acid as long as the object of the present invention is not adversely affected, where desired.

The rubber composition of the present invention can be, in general, crosslinked with sulfur, and sulfur is preferable as the crosslinking agent. It is preferable that the amount of the crosslinking agent is 0.1 to 10.0 parts by mass and more preferably 1.0 to 5.0 parts by mass as the amount of sulfur. When the amount of the crosslinking agent is 0.1 part by mass or more, the low heat buildup property and the resistance to fracture of the vulcanized rubber are excellent. When the amount of the crosslinking agent is 10.0 parts by mass or less, the rubber elasticity is excellent.

The vulcanization accelerator used in the present invention is not particularly limited. Examples of the vulcanization accelerator include thiazole-based vulcanization accelerators such as M (2-mercaptobenzothiazole), DM (dibenzothiazyl disulfide) and CZ (N-cyclohexyl-2-benzothiazylsulfenamide) and guanidine-based vulcanization accelerators such as DPG (diphenylguanidine). It is preferable that the amount of the vulcanization accelerator is 0.1 to 5.0 parts by mass and more preferably 0.2 to 3.0 parts by mass per 100 parts by mass of the rubber component.

Examples of the process oil which can be used in the rubber composition of the present invention include paraffinic process oils, naphthenic process oils and aromatic process oils. Aromatic process oils are used for applications in which tensile strength and abrasion resistance are important. Naphthenic process oils and paraffinic process oils are used for applications in which hysteresis loss and properties at low temperatures are important. It is preferable that the amount of the process oil is 0 to 100 parts by mass per 100 parts by mass of the rubber component. When the amount of the process oil is 100 parts or less, decreases in the tensile strength and the low heat buildup property can be suppressed.

Examples of the antioxidant which can be used in the rubber composition of the present invention include 3C (N-isopropyl-N'-phenyl-p -phenylenediamine), 6C [N-(1,3-dimethylbutyl)-N'-phenyl-p-phenylenediamine], AW (6-ethoxy-2,2,4-trimethyl-1,2-dihydroquinoline) and condensates of diphenylamine and acetone at high temperatures. It is preferable that the amount of the antioxidant is 0.1 to 5.0 parts by mass and more preferably 0.3 to 3.0 parts by mass per 100 parts by mass of the rubber component.

The rubber composition of the present invention can be obtained by mixing the components in amounts in accordance with the formulation described above using a mixer such as a Banbury mixer, rolls and an internal mixer. After being processed, the rubber composition is vulcanized and advantageously used for a sidewall of a tire.

The tire of the present invention is produced in accordance with the conventional process using the rubber composition of the present invention for the sidewall. Specifically, the rubber composition of the present invention comprising the various chemicals as described above is processed for preparing various members of the tire in the unvulcanized condition, and the members are assembled on a tire former in accordance with the convention process to prepare a green tire. The prepared green tire is treated under a pressure at a high temperature in a curing machine, and a tire is obtained.

The tire of the present invention obtained as described above exhibits the excellent low heat buildup property and the excellent resistance to fracture. Since the workability of the rubber composition is excellent, the productivity is excellent.

EXAMPLES

The present invention will be described more specifically with reference to examples in the following. However, the present invention is not limited to the examples.

Physical properties of polybutadiene rubbers, carbon black, vulcanized rubbers and unvulcanized rubbers were measured in accordance with the following methods.

<<Physical properties of polybutadiene rubber>>

<Analysis of the micro-structure in accordance with the Fourier transform infrared analysis (FT-IR)>

Using carbon sulfide alone placed in the same cell as that used for the measurement of a sample as the reference, the FT-IR transmission spectrum of a carbon disulfide solution of a polybutadiene rubber having a concentration adjusted at 5 mg/liter was obtained. The values of e, f and g were obtained by the following determinantal equation (XIX):

$$\begin{bmatrix} 1.7455 & 0 & -0.0151 \\ -0.0454 & 0.4292 & -0.0129 \\ -0.007 & 0 & 0.3746 \end{bmatrix} \begin{bmatrix} \log_{10}(a/d) \\ \log_{10}(a/b) \\ \log_{10}(a/c) \end{bmatrix} = \begin{bmatrix} e \\ f \\ g \end{bmatrix} \quad \text{... (XIX)}$$

wherein a represents the value of the upward peak at about 1130 $cm^{-1}$, b represents the value of the downward peak at about 967 $cm^{-1}$, c represents the value at the downward peak at about 911 $cm^{-1}$, and d represents the value at the downward peak at about 736 $cm^{-1}$, and the content of the cis-1,4 bond, the content of the trans-1,4 bond and the content of the vinyl bond were obtained from the obtained values in accordance with the following equations ((XXI), (XXII) and (XXIII):

$$\text{(content of the cis-1,4-bond)} = e/(e+f+g)\times 100\% \quad \text{... (XXI)}$$

$$\text{(content of the trans-1,4 bond)} = f/(e+f+g)\times 100\% \quad \text{... (XXII)}$$

$$\text{(content of the vinyl bond)} = g/(e+f+g)\times 100\% \quad \text{... (XXIII)}$$

The upward peak at about 1130 $cm^{-1}$ is used for the base line; the downward peak at about 967 $cm^{-1}$ is assigned to the trans-,14-bond; the downward peak at about 911 $cm^{-1}$ is assigned to the vinyl bond; and the downward peak at about 736 $cm^{-1}$ is assigned to the cis-1,4 bond.

<Measurement of number-average molecular weight (Mn), weight-average molecular weight (Mw) and molecular weight distribution (Mw/Mn)>

The above values were measured using GPC [manufactured by TOSO Co. Ltd., HLC-8020] with a refractometer as the detector. The results of the measurement were expressed by the values of the corresponding monodisperse polystyrene which was used as the reference. The column was GMHXL [manufactured by TOSO Co. Ltd.], and the solvent for the elution was tetrahydrofuran.

<Fraction of modified chain end>

The fraction of the modified chain end was obtained in accordance with the method described in the specification.
The low heat buildup property and the resistance to fracture of a vulcanized rubber and the Mooney viscosity of an unvulcanized rubber were measured in accordance with the methods described below.

<<Physical properties of carbon black>>

<Specific surface area by nitrogen adsorption>

The specific surface area by nitrogen adsorption was measured in accordance with the method of Japanese Industrial Standard K6217-2:2001.

<<Physical properties of vulcanized rubber>>

<Low heat buildup property>

For the measurement of the low heat buildup property, tan δ (50°C) was measured at a temperature of 50°C, a strain of 3% and a frequency of 15 Hz using an apparatus for measuring viscoelasticity (manufactured by RHEOMETRIX Company), and the result was expressed by an index using tan δ (50°C) in Comparative Example 2 as the reference, which was set at 100. The smaller the value, the better the low heat buildup property.

<Resistance to fracture>

The tensile stress at break (TSb) was measured in accordance with the method of Japanese Industrial Standard 6251:2001 and used as the strength at break (Tb). The result was expressed by an index using the value in Comparative Example 2 as the reference, which was set at 100. The greater the value, the greater the strength at break and the better the resistance to fracture.

<<Physical property of unvulcanized rubber>>

<Mooney viscosity>

The Mooney viscosity of $ML_{1+4}$ was measured at 128°C in accordance with the method of Japanese Industrial Standard 6300-1:2001.

Preparation Example 1 <Preparation of Catalyst A>

Into a 100 ml glass vessel having a rubber stopper which had been dried and purged with nitrogen, 7.11 g of a cyclohexane solution (15.2% by mass) of butadiene, 0.59 ml of a cyclohexane solution (0.56 moles/liter) of neodymium neodecanoate, 10.32 ml of a toluene solution (3.23 moles based on the concentration of aluminum) of methylaluminoxane MAO (manufactured by TOSO AKZO Co. Ltd., PMAO) and 7.77 ml of a hexane solution (0.90 moles/liter) of diisobutylaluminum hydride (manufactured by KANTO KAGAKU Co. Ltd.) were placed in this order, and the resultant mixture was aged at the room temperature for 2 minutes. To the aged mixture, 1.57 ml of a hexane solution (0.95 moles/liter) of diethylaluminum chloride (manufactured by KANTO KAGAKU Co. Ltd.) was added, and the obtained mixture was aged at the room temperature for 15 minutes while the mixture was occasionally stirred. The concentration of neodymium in the solution of Catalyst A obtained as described above was 0.010 mole/liter.

Preparation Example 2 < Polybutadiene rubber A>

A glass bottle having a volume of about 1 liter and having a rubber stopper was dried and purged with nitrogen. A cyclohexane solution of butadiene which had been dried and purified and dry cyclohexane were placed into the glass bottle so that 400 g of a 12.5% by weight cyclohexane solution of butadiene was formed in the glass bottle.

To the resultant solution, 3.83 ml (corresponding to 0.043 mole of neodymium) of the solution of Catalyst A prepared in advance was added, and the polymerization was conducted in a water bath at 50°C for 1.0 hour. Thereafter, 2 ml of a 5% by mass isopropanol solution of an antioxidant 2,2'-methylenebis(4-ethyl-6-t-butylphenol) (occasionally referred to as NS-5, hereinafter) was added at 50°C to terminate the polymerization. The formed polymer was reprecipitated in isopropanol containing a small amount of NS-5 and dried by a drum drier, and Polybutadiene rubber A was obtained with a yield of about 100%. The result of analysis of Polybutadiene rubber A is shown in Table 1.

Preparation Example 3 <Modified polybutadiene rubber B>

A glass bottle having a volume of about 1 liter and having a rubber stopper was dried and purged with nitrogen. A cyclohexane solution of butadiene which had been dried and purified and dry cyclohexane were placed into the glass bottle so that 400 g of a 12.5% by weight cyclohexane solution of butadiene was formed in the glass bottle.

To the resultant solution, 3.83 ml (corresponding to 0.043 mole of neodymium) of the solution of Catalyst A prepared in advance was added, and the polymerization was conducted in a water bath at 50°C for 1.0 hour. Thereafter, 0.020 mmole of 4-diethylaminobenzophenone was added. After the resultant mixture was stirred at 50°C for 1 hour, 2 ml of a 5% by mass isopropanol solution of an antioxidant NS-5 was added at 50°C to terminate the reaction. The formed polymer was reprecipitated in isopropanol containing a small amount of NS-5 and dried by a drum drier, and Modified polybutadiene rubber B was obtained with an yield of about 100%. The result of analysis of Modified polybutadiene rubber B is shown in Table 1.

Preparation Example 4 <Modified polybutadiene rubber C>

A glass bottle having a volume of about 1 liter and having a rubber stopper was dried and purged with nitrogen. A cyclohexane solution of butadiene which had been dried and purified and dry cyclohexane were placed into the glass bottle so that 400 g of a 12.5% by weight cyclohexane solution of butadiene was formed in the glass bottle.

To the resultant solution, 3.83 ml (corresponding to 0.043 mole of neodymium) of the solution of Catalyst A prepared in advance was added, and the polymerization was conducted in a water bath at 50°C for 1.0 hour. Thereafter, 0.425 mmole of 4-diethylaminobenzophenone was added. After the resultant mixture was stirred at 50°C for 1 hour, 2 ml of a 5% by mass isopropanol solution of an antioxidant NS-5 was added at 50°C to terminate the reaction. The formed polymer was reprecipitated in isopropanol containing a small amount of NS-5 and dried by a drum drier, and Modified polybutadiene rubber C was obtained with an yield of about 100%. The result of analysis of Modified polybutadiene rubber C is shown in Table 1.

Preparation Example 5 <Modified polybutadiene rubber D>

A glass bottle having a volume of about 1 liter and having a rubber stopper was dried and purged with nitrogen. A cyclohexane solution of butadiene which had been dried and purified and dry cyclohexane were placed into the glass bottle so that 400 g of a 12.5% by weight cyclohexane solution of butadiene was formed in the glass bottle.

To the resultant solution, 3.83 ml (corresponding to 0.043 mole of neodymium) of the solution of Catalyst A prepared in advance was added, and the polymerization was conducted in a water bath at 50°C for 1.0 hour. Thereafter, 0.425 mmole of 1-butylaziridine was added. After the resultant mixture was stirred at 50°C for 1 hour, 2 ml of a 5% by mass isopropanol solution of an antioxidant NS-5 was added at 50°C to terminate the reaction. The formed polymer was reprecipitated in isopropanol containing a small amount of NS-5 and dried by a drum drier, and Modified polybutadiene rubber D was obtained with an yield of about 100%. The result of analysis of Modified polybutadiene rubber D is shown in Table 1.

Examples 1 to 3 and Comparative Examples 1 to 3

Using Polybutadiene rubber A obtained in Preparation Example 2 and Modified polybutadiene rubbers B to D obtained in Preparation Examples 3 to 5, respectively, rubber compositions were prepared in steps such that the rubber component, carbon black, stearic acid, an antioxidant 6C and a softener were mixed in the non-product mixing of the first mixing step and, then, zinc oxide, an antioxidant 224, vulcanization accelerators and sulfur were mixed with the obtained rubber composition of the non-product mixing in the product mixing of the second step each in accordance

with the formulations shown in Table 2. The rubber compositions obtained as described above were treated for vulcanization under a condition of 160°C and 15 minutes, and the physical properties, the low heat buildup property and the resistance to fracture of the vulcanized rubbers were measured. The results are shown in Table 1.

Table 1

| | | | | | | |
|---|---|---|---|---|---|---|
| Example | 1 | 2 | 3 | | | |
| Comparative Example | | | | 1 | 2 | 3 |
| Modifier | AB | AB | Azi | - | - | - |
| Polybutadiene rubber | BR-B | BR-C | BR-D | BR-A | BR-01 | BR-01 |
| Content of cis-1,4 bond (%) | 94.2 | 94.8 | 94.8 | 94.4 | 96.1 | 96.1 |
| Content of vinyl bond (%) | 0.75 | 0.73 | 0.74 | 0.76 | 2.55 | 2.55 |
| Fraction of modified chain end (%) | 44 | 65 | 65 | 0 | 0 | 0 |
| Number-average molecular weight (Mn)($\times$1000) | 210 | 215 | 224 | 219 | 162 | 162 |
| (Mw/Mn) | 1.9 | 1.8 | 1.9 | 2.0 | 3.64 | 3.64 |
| Amount of carbon black FEF (part by mass) | 50 | 50 | 50 | 50 | 50 | 30 |
| 3% tan $\delta$ | 82 | 73 | 65 | 101 | 100 | 73 |
| Strength at break (Tb) | 117 | 116 | 119 | 99 | 100 | 84 |
| Mooney viscosity $ML_{1+4}$ (128°C) | 60 | 54 | 58 | 56 | 58 | 44 |

Notes:
AB: 4-diethylaminobenzophenone
Azi: 1-butylaziridine
BR-A: unmodified Polybutadiene A obtained in Preparation Example 2 of the present application
BR-B to -D: Modified polybutadiene rubbers B to D obtained in Preparation Examples 3 to 5 of the present application
BR-01: manufactured by JSR Co. Ltd., unmodified polybutadiene rubber

Table 2

| Stage of mixing | Raw material | | Amount (part by mass) |
|---|---|---|---|
| Non-product mixing | polybutadiene rubber | *1 | 60.0 |
| | natural rubber | *2 | 40.0 |
| | carbon black FEF | *3 | refer to Table 1 |
| | stearic acid | | 2.0 |
| | antioxidant 6C | *4 | 3.5 |
| | softener | *5 | 4.0 |
| Product mixing | zinc oxide | | 3.0 |
| | antioxidant 224 | *6 | 1.0 |
| | vulcanization accelerator CZ-G | *7 | 0.4 |
| | vulcanization accelerator DM-P | *8 | 0.2 |
| | sulfur | | 1.4 |

Notes:
*1: polybutadiene rubber: unmodified Polybutadiene A and Modified polybutadiene rubbers B to D obtained in Preparation Examples 2 to 5 of the present application and BR-01
*2: RSS #3
*3: carbon black: manufactured by TOKAI CARBON Co. Ltd., "SIEST SO (FEF)" (a trade name)
*4: antioxidant 6C: N-(1,3-dimethylbutyl)-N'-phenyl-p-phenylenediamine
*5: softener: manufactured by FUJI KOSAN Co. Ltd., "FUKKOL AROMA #3"
*6: antioxidant 224: a polymerization product of 2,2,4-trimethyl-1,2-dihydroquinoline
*7: vulcanization accelerator CZ-G: N-cyclohexyl-2-benzothiazylsulfenamide
*8: vulcanization accelerator DM-P: dibenzothiazyl disulfide

It is shown by the results in Table 1 that the rubber compositions of the present invention (Examples 1 to 3) in which the fraction of the modified chain end was adjusted at 20% or greater exhibited more excellent low heat buildup property and resistance to fracture with respect to both types of the used modifiers in comparison with those of the rubber compositions in Comparative Examples 1 to 3 (unmodified). In particular, in Examples 3 in which 1-butylaziridine was used as the modifier, the low heat buildup property and the resistance to fracture were remarkably improved even in comparison with those in Examples 1 and 2.

In Comparative Example 3 in which the amount of carbon black was decreased to 30 parts by mass from 50 parts by mass, the resistance to fracture markedly decreased although the low heat buildup property was improved.

INDUSTRIAL APPLICABILITY

The rubber composition of the present invention using the specific modified polybutadiene rubber is advantageously used for a sidewall and/or treads and, in particular, for a sidewall of tires for passenger cars, light passenger cars, light trucks, trucks, busses and construction vehicles.

## Claims

1. A rubber composition comprising a rubber component, which comprises 20 to 80 parts by mass of a modified polybutadiene rubber having a content of cis-1,4 bond of 92% or greater, a content of vinyl bond of 1.5% or smaller and a fraction of modified chain end of 20% or greater and 80 to 20 parts by mass of natural rubber and/or at least one other diene-based synthetic rubber, and 10 to 70 parts by mass of carbon black having a specific surface area by nitrogen adsorption of 20 to 100 $m^2/g$ per 100 parts by mass of the rubber component.

2. A rubber composition according to Claim 1, wherein the modified polybutadiene is obtained by modifying a polymer having active chain ends, which is obtained by polymerizing 1,3-butadiene in an organic solvent using a catalyst comprising a compound having a rare earth element of a lanthanoid series, with a modifier having nitrogen atom, oxygen atom and/or sulfur atom.

3. A rubber composition according to Claim 2, wherein the modifier is at least one compound selected from compounds of Component (a) represented by general formula (I):

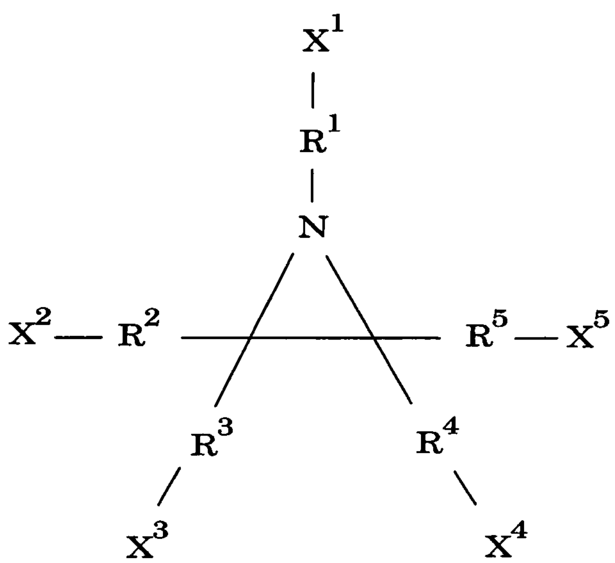

... (I)

wherein $X^1$ to $X^5$ each represent a monovalent functional group which has hydrogen atom or at least one atom or group selected from halogen atoms, carbonyl group, thiocarbonyl group, isocyanate group, thioisocyanate group, epoxy group, thioepoxy group, halogenated silyl group, hydrocarbyloxysilyl group and sulfonyloxy group and does not have any of active proton and onium salts, atoms and groups represented by $X^1$ to $X^5$ may be same with or

different from each other, and at least one of $X^1$ to $X^5$ does not represent hydrogen atom; $R^1$ to $R^5$ each independently represent a single bond or a divalent hydrocarbon group having 1 to 18 carbon atoms; and a plurality of aziridine rings may be bonded via any one of groups represented by $X^1$ to $X^5$ and $R^1$ to $R^5$.

**4.** A rubber composition according to Claim 3, wherein the compound of Component (a) is a compound represented by general formula (I) in which $X^1$ does not represent hydrogen atom when $R^1$ represents a single bond, and $R^1$ does not represent a single bond when $X^1$ represents hydrogen atom.

**5.** A rubber composition according to Claim 2, wherein the modifier is at least one compound selected from following compounds of Components (b) to (h):

Component (b): a halogenated organometallic compound, a halogenated metal compound or an organometallic compound represented by one of formulae: $R^6_nM'Z_{x-n}$, $R^7_nM'(-R^8-COOR^9)_{x-n}$ and $R^7_nM'(-R^8-COR^9)_{x-n}$, wherein $R^6$ to $R^8$ each represent a hydrocarbon group having 1 to 20 carbon atoms and may represent same groups or different groups, $R^9$ represents a hydrocarbon group having 1 to 20 carbon atoms which may have carbonyl group or ester group at a side chain, M' represents tin atom, silicon atom, germanium atom or phosphorus atom, Z represents a halogen atom, x represents valence of the atom represented by M', and n represents an integer of 0 to (x-1);
Component (c): a heterocumulene compound having Y=C=Y' bond in a molecule, wherein Y represents carbon atom, oxygen atom, nitrogen atom or sulfur atom, and Y' represents oxygen atom, nitrogen atom or sulfur atom;
Component (d): a three-membered heterocyclic compound represented by general formula (II):

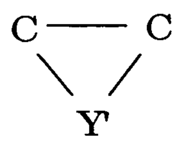

... (II)

wherein Y' represents -O-, -NH- or -S-;
Component (e): a halogenated isocyano compound;
Component (f): a carboxylic acid, an acid halide, an ester compound, a carbonic acid ester compound or an acid anhydride represented by one of formulae: $R^{10}-(COOH)_m$, $R^{11}(COZ)_m$, $R^{12}-(COO-R^{13})$, $R^{14}-OCOO-R^{15}$, $R^{16}-(COOCO-R^{17})_m$ and general formula (III):

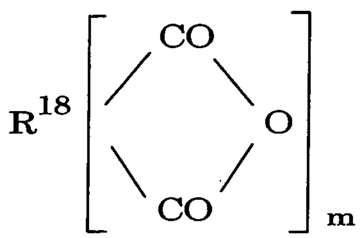

... (III)

wherein $R^{10}$ to $R^{18}$ each represent a hydrocarbon group having 1 to 50 carbon atoms and may represent same groups or different groups, Z represents a halogen atom, and m represents an integer of 1 to 5;
Component (g): a metal salt of a carboxylic acid represented by any one of formulae: $R^{19}_kM''(OCOR^{20})_{4-k}$, $R^{21}_kM''(OCO-R^{22}-COOR^{23})_{4-k}$ and general formula (IV):

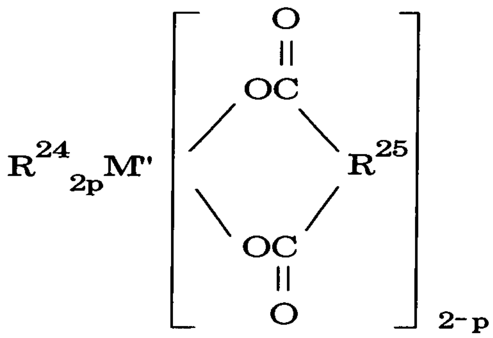

··· (IV)

wherein $R^{19}$ to $R^{25}$ each represent a hydrocarbon group having 1 to 20 carbon atoms and may represent same groups or different groups, M" represents tin atom, silicon atom or germanium atom, k represents an integer of 0 to 3, and p represents 0 or 1; and

Component (h): an N-substituted aminoketone, an N-substituted aminothioketone, an N-substituted aminoaldehyde, an N-substituted aminothioaldehyde or a compound having $-C-(=Y^1)-N<$ bond in a molecule, $Y^1$ representing oxygen atom or sulfur atom.

**6.** A rubber composition according to any one of Claims 2 to 5, wherein the polymer having active chain ends is obtained by polymerizing 1,3-butadiene using a catalyst system comprising:

Component (A): a compound having a rare earth element of a lanthanoid series having an atomic number of 57 to 71 in the Periodic Table or a reaction product of said compound with a Lewis base;

Component (B): an organoaluminum compound represented by $AlR^{26}R^{27}R^{28}$, wherein $R^{26}$ and $R^{27}$ each represent hydrogen atom or a hydrocarbon group having 1 to 10 carbon atoms and may represent a same atom or group or different atom and groups, and $R^{28}$ represents a hydrocarbon group having 1 to 10 carbon atoms, which may be same with or different from groups represented by $R^{26}$ and $R^{27}$; and

Component (C): at least one of Lewis acids, complex compounds of metal halide compounds and Lewis bases and organic compounds having an active halogen.

**7.** A rubber composition according to Claim 6, wherein the compound having a rare earth element of a lanthanoid series of Component (A) is a salt of neodymium soluble in a hydrocarbon solvent.

**8.** A rubber composition according to Claim 7, wherein the compound having a rare earth element of a lanthanoid series of Component (A) is a salt of neodymium with a branched carboxylic acid or a reaction product of said salt with a Lewis base.

**9.** A rubber composition according to any one of Claims 6 to 8, wherein the catalyst system further comprises an aluminoxane as Component (D).

**10.** A rubber composition according to Claim 9, wherein the catalyst system is prepared preliminarily in presence of Component (A), Component (B), Component (C), Component (D) and 1,3-butadiene.

**11.** A rubber composition according to any one of Claims 1 to 10, wherein the modified polybutadiene has a ratio of a weight-average molecular weight (Mw) to a number-average molecular weight (Mn), (Mw)/(Mn), of 1.6 to 3.5.

**12.** A rubber composition according to any one of Claims 1 to 11, wherein the modified polybutadiene rubber has a number-average molecular weight (Mn) of 100,000 to 500,000.

**13.** A rubber composition according to Claim 12, wherein the modified polybutadiene rubber has a number-average molecular weight (Mn) of 150,000 to 300,000.

**14.** A rubber composition according to any one of Claims 1 to 13, which can be crosslinked with sulfur.

**15.** A tire which uses a rubber composition described in any one of Claims 1 to 14 for a sidewall.

Figure 1

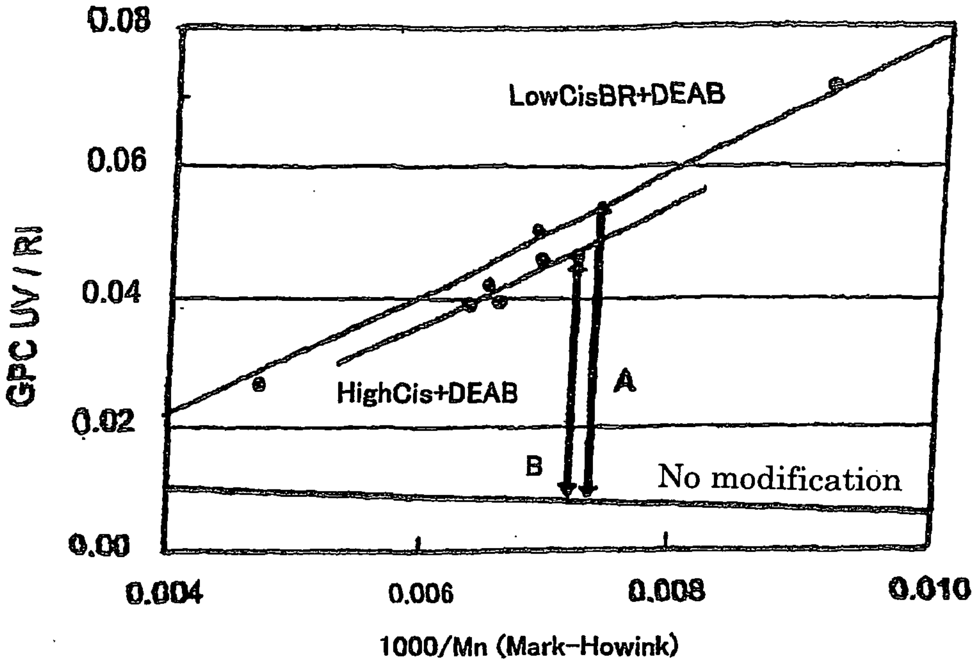
0.08
0.06
0.04
0.02
0.00
GPC UV / RI
LowCisBR+DEAB
HighCis+DEAB
A
B
No modification
0.004
0.006
0.008
0.010
1000/Mn (Mark-Howink)

**INTERNATIONAL SEARCH REPORT**

International application No.
PCT/JP2007/050834

A. CLASSIFICATION OF SUBJECT MATTER
*C08L15/00*(2006.01)i, *B60C1/00*(2006.01)i, *C08C19/44*(2006.01)i, *C08K3/04*(2006.01)i, *C08L7/00*(2006.01)i, *C08L9/00*(2006.01)i

According to International Patent Classification (IPC) or to both national classification and IPC

B. FIELDS SEARCHED

Minimum documentation searched (classification system followed by classification symbols)
C08L7/00-21/02, B60C1/00, C08C19/44, C08K3/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | WO 2006/112450 A1 (Bridgestone Corp.), 26 October, 2006 (26.10.06), Claims; Par. No. [0111]; examples 1 to 6 (Family: none) | 1-15 |
| P,A | WO 2006/70634 A1 (Bridgestone Corp.), 06 July, 2006 (06.07.06), Claims; Par. No. [0031] & JP 2006-182974 A | 1-15 |
| X | JP 2001-139633 A (JSR Corp.), 22 May, 2001 (22.05.01), Claims; Par. No. [0068]; examples (Family: none) | 1,2,5-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 April, 2007 (16.04.07) | 01 May, 2007 (01.05.07) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2007/050834

C (Continuation). DOCUMENTS CONSIDERED TO BE RELEVANT

| Category* | Citation of document, with indication, where appropriate, of the relevant passages | Relevant to claim No. |
|---|---|---|
| X | WO 95/4090 A1 (Nippon Zeon Co., Ltd.), 09 February, 1995 (09.02.95), Claims; examples & EP 713885 A1 & US 5844050 A | 1,2,5-8, 11-14 |
| X | JP 2000-086814 A (Nippon Zeon Co., Ltd.), 28 March, 2000 (28.03.00), Claims; Par. Nos. [0008], [0009], [0038] to [0040], [0051], [0052]; examples (Family: none) | 1,5-8,11-14 |
| X | WO 2003/46020 A1 (Bridgestone Corp.), 05 June, 2003 (05.06.03), Claims; page 4, line 12 to page 6, line 14; page 22, lines 24 to 29; examples & EP 1449857 A1 & US 2005/70672 A1 | 1,2,6-15 |
| X | JP 2005-008870 A (JSR Corp.), 13 January, 2005 (13.01.05), Claims; Par. Nos. [0028], [0050], [0053]; examples & EP 1479698 A1 & US 2005/9979 A1 & US 2006/264560 A1 | 1,2,6-15 |
| A | JP 63-289043 A (Nippon Shokubai Kagaku Kogyo Co., Ltd.), 25 November, 1988 (25.11.88), Claims; examples (Family: none) | 1-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEISEI5199387530 B
- JP SHOWA621987207342 B
- JP SHOWA631988178102 B
- JP HEISEI5199359103 B
- JP SHOWA631988297403 B
- WO 9504090 A